# EUROPEAN PATENT APPLICATION

(11) **EP 2 610 216 A1**
(43) Date of publication of application: **03.07.2013**
(21) Application number: 11195743.7
(22) Date of filing: 27.12.2011
(51) Int. Cl.: C01B 17/04, C01B 31/20, F23C 99/00

(54) **Chemical-looping combustion of sour gas**

(71) Applicant: Shell Internationale Research Maatschappij B.V., 2596 HR The Hague (NL)
(72) Inventor: Mirfenderski, Yasaman, 1031 HW Amsterdam (NL); Sprachmann, Gerald, 1031 HW Amsterdam (NL)
(74) Representative: Matthezing, Robert Maarten

(57) **Abstract**

The invention concerns a process wherein a fuel gas is converted with air by chemical-looping combustion into thermal energy and steam while producing a flue gas stream comprising carbon dioxide (CO₂), wherein: (i) an oxygen carrier (OC) is oxidized with air, (ii) the fuel gas is oxidized with the oxidized OC, resulting in a (partially) spent oxygen carrier that is recycled to step (i) and the flue gas stream comprising the produced CO₂, and (iii) the produced CO₂ is separated, and (iv) optionally, the separated CO₂ is compressed and stored wherein:
(v) the fuel gas is sour gas containing H₂S and/or volatile sulphur compounds,
(vi) the flue gas stream further comprises SO₂, and
(vii) the SO₂ is separated from the flue gas stream.

## Description

This invention concerns Chemical Looping Combustion (CLC) of a fossil fuel, with separation of CO₂ for capture and storage. More in particular, the invention concerns a fuel to thermal energy conversion process for sour gas containing H₂S as fossil fuel, which fuel does not require sweetening before combustion, and wherein SO₂ is separated from the other components in the flue gas produced by the CLC process.

Sour gas is natural gas or any other gas containing significant amounts of hydrogen sulphide (H₂S). Natural gas is usually considered sour if there are more than 5.7 milligrams of H₂S per cubic meter of natural gas, which is equivalent to approximately 4 ppm by volume. On the other hand, natural gas that does not contain significant amounts of hydrogen sulphide is called "sweet gas." Natural gas can contain several ppm of volatile sulphur compounds, but gas from some wells have been known to contain 90% by volume hydrogen sulphide.

From a paper entitled "Effect of gas composition in Chemical-Looping Combustion with copper-based oxygen carriers: Fate of sulphur", by Forero et al in International Journal of Greenhouse Gas Control 4 (2010)762-770 it is known that CLC is an emerging technology for C0₂ capture because separation of this gas from the other flue gas components is inherent to the process and thus no energy is wasted for the separation. It is indicated that natural or refinery gas can be used as gaseous fuels and they may contain different amounts of sulphur compounds, such as H₂S and COS. This paper by Forero et al presents the combustion results obtained with a Cu-based oxygen carrier using mixtures of CH₄ and H₂S as fuel. The influence of H₂S concentration on the gas product distribution and combustion efficiency, sulphur splitting between the fuel reactor (FR) and the air reactor (AR), oxygen carrier deactivation and material agglomeration was investigated in a continuous CLC plant (500Wth). The oxygen carrier to fuel ratio was the main operating parameter affecting the CLC system. Complete fuel combustion were reached at 1073 K working at fuel ratio values ≥ 1.5. The presence of H₂S did not produce a decrease in the combustion efficiency even when working with a fuel containing 1300 ppmv H₂S. At these conditions, the great majority of the sulphur fed into the system was released in the gas outlet of the FR as SO₂, affecting the quality of the CO₂ produced. Formation of copper sulphide, Cu₂S, and the subsequent reactivity loss was only detected when working at low values of fuel ratio ≤ 1.5, although this fact did not produce any agglomeration problem in the fluidized beds. In addition, the oxygen carrier was fully regenerated in a H₂S-free environment. It can be concluded that Cu-based oxygen carriers are adequate materials to be used in a CLC process using fuels containing H₂S although the quality of the CO₂ produced is affected.

Although this paper discusses the possibility of using a fuel containing up to 0.13 vol% H₂S (1300 ppmv), the reader would still assume that a sweetening of the sour gas is needed, in particular given the comment about the quality of the CO₂ so produced. In other words, a person skilled in the art would not consider the direct conversion of sour gas to thermal energy.

In direct combustion of sour gas with a high H₂S content problems occur with respect to the burner boiler set up to be used for steam and power production. These problems are mainly corrosion related and require the use of expensive materials and non-standard metallurgy. In addition, the separation of the SO₂ from the other components of the flue gas so produced implies significant cost and plot space due to large volumes to be treated, hence making this option overall economically not viable. Accordingly, before a sour gas containing H₂S and volatile sulphur compounds is used for combustion and subsequently steam and power production, the sour gas is treated to remove those impurities to acceptable levels, commonly by an amine gas treating process. A process for sweetening fuel gas may for instance be found in EP-B-1474218.

The removed H₂S (e.g., in the form of an acid gas) is most often subsequently converted to by-product elemental sulphur in a Claus process or it can be treated in a WSA Process unit where the by-product is sulphuric acid. Alternatively, the highly concentrated H₂S gas, the by-product of the amine treatment plant, can be recompressed by compressor units specifically designed to handle highly toxic gas and injected in the reservoir. This may require additional expenses, for instance concerning additional units for acid gas enrichment, which further increase the costs of sweetening significantly. The sweetening process and the various H₂S treatments are necessary, albeit at significant costs.

The current inventors realised that sour gas as fossil fuel can be used directly in the Chemical Looping Combustion without any pre-treatment of sour gas, and that sour components such as H₂S would add high energetic value when combusted. At the same time, the produced SO₂ can be captured more economically since the volumetric flow of the flue gases is seven times less than direct combustion in the burner-boiler, resulting in significantly smaller post treatment units. Thus, the inventors realised that a Chemical Looping Combustion process even at H₂S levels significantly greater than 1300 ppmv does not require the conventional sweetening as a pre-treatment step. Moreover, CLC results in smaller (and hence cheaper) equipment and pure CO₂ stream. Furthermore, the produced SO₂ in this line-up can now be captured more economically in an SO₂ capture process as compared to a conventional burner set up where the produced flue gas will contain significant amounts of unreacted nitrogen and hence the gas volume to be cleaned will be significantly greater. The captured SO₂ may be sent to a next destination such as e.g. a sulphuric acid plant, a sulphur recovery plant, liquid SO₂, or even SO₂ injection, provided the latter technology is proven to be safe.

It is an object of the current invention to provide a process wherein sour gas is used as fuel in a fuel to thermal energy conversion process, without the need of a sweetening pre-treatment, with improved capture of the produced SO₂, whilst maintaining the inherent CO₂ separation characteristics of Chemical Looping Combustion. Accordingly, the current invention concerns a process as claimed in claim 1.

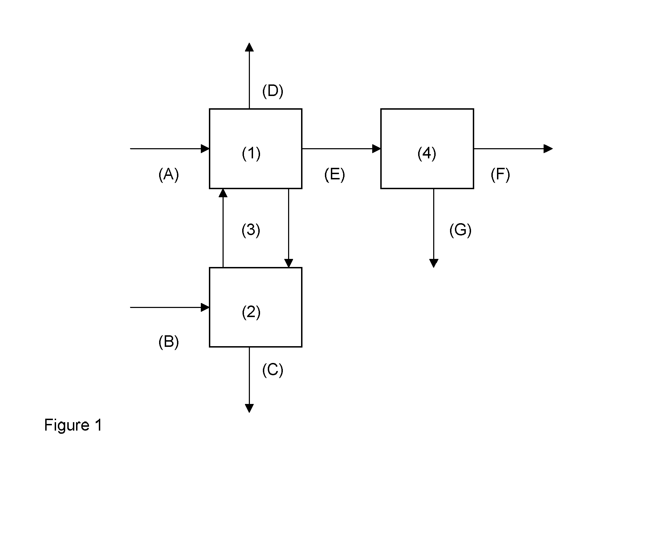

An embodiment of the inventive process is schematically represented in Figure 1. In this figure:
(A) represents sour gas used as fuel;
(B) represents air;
(C) represents air depleted in O₂;
(D) represents power and steam;
(E) represents flue gas;
(F) represents essentially pure CO₂, and
(G) represents essentially pure SO₂.
   Moreover
   (1) represents a fuel reactor (FR)
   (2) represents an air reactor (AR) wherein the oxygen carriers are loaded
   (3) represents a loop wherein oxygen loaded carriers and depleted oxygen carriers are recirculated from (AR) to (FR) and from (FR) to (AR) respectively, and
   (4) represents an SO₂ separation unit.

Chemical-looping combustion technology with inherent separation of CO₂ is known. It has been described in the aforementioned paper and the references cited therein. In principle, a metal oxide is used as an oxygen carrier to transfer oxygen from an air reactor to a fuel reactor. Direct contact between fuel and combustion air is avoided. The products of the combustion reaction, carbon dioxide and water, are kept separate from nitrogen and any remaining oxygen. Thus, compared with other carbon capture technologies for steam generation, the potential advantages of CLC include:
- No additional energy for CO₂ separation,
- No need for air separation unit,
- Lower NOₓ levels in gas coming from the air reactor,
- No residual oxygen in the separated CO₂ stream,
- Potential for water recovery.

While having all the above mentioned advantages, further advantages, in case of the use of a sour gas containing H₂S and volatile sulphur compounds, include eliminating the expensive and complex front end treating for sour gas combustion, utilising the high caloric content of burning H₂S and significant size reduction of the SO₂ capture system for SO₂ removal from fuel reactor product gas, since the gas volume to be cleaned is reduced by a factor of seven (no nitrogen originating from air present) with respect to conventional air-fired combustion.

CLC conditions are known. Preferably an atmospheric chemical-looping combustor is used, composed of two interconnected fluidized bed reactors, a fuel reactor (FR) and an air reactor (AR), separated by a loop seal. The chemical-looping combustor may further comprise a riser for solids transport to the fuel reactor, a cyclone and a solid valve to control the solids fed to the fuel reactor (FR), or similar equipment. The FR preferably consists of a bubbling fluidized bed. In this reactor the fuel combustion is performed by an oxygen carrier, giving CO₂ and H₂O. The solids in this respect are particles of the oxygen carrier. Depleted oxygen carrier particles overflow into the AR through another loop seal, preferably through a U-shaped fluidized loop seal, to avoid gas mixing between fuel and air.

The loading of the oxygen carrier takes place at the AR, which preferably consists of a bubbling fluidized bed. The regeneration of the oxygen carrier happens in the AR, preferably in a dense bed of the AR allowing residence times high enough for the complete oxidation of the reduced carrier. Secondary air may be introduced at the top of the bubbling bed, for instance, to help particle entrainment. N₂ and unreacted O₂ leave the AR, for instance, passing through a high-efficiency cyclone and a filter or similar equipment. The recovered solid particles may be sent to a reservoir of solids setting the oxygen carrier ready to start a new cycle and avoiding the mixing of fuel and air out of the riser. The regenerated oxygen carrier particles may be returned to the FR by gravity from the reservoir of solids located above a solids valve. Fine particles produced by fragmentation/attrition in the plant are preferably recovered, for instance in filters that are located downstream of the FR and AR. It is a preferred feature of the combustor to have the possibility to control and/or measure the solids circulation rate at any moment through the solids valves located above the FR.

Various oxygen carriers in CLC processes are known and suitable. Suitable metals include Fe, Ni, Mn and Cu. The oxygen carrier (OC) in the current process is preferably a Cu-based oxygen carrier, with the Cu deposited on a solid support. Various supports may be used. Preferably silica or alumina supports are used, more preferably γ-Al₂O₃.

The reaction conditions in the AR are such as to convert the OC without adversely affecting the particles itself and without the generation of NOₓ. Preferably, the pressure is close to atmospheric pressure, albeit that a slightly higher or lower pressure may be use, e.g., from 0.1 to 70 bar g, preferably from 0.5 to 5 bar g. The temperature may vary from 700 to 1200°C, preferably from 750 to 950°C.

The reaction conditions in the FR are such as to convert at least 90 vol%, preferably at least 95 vol% of the sour gas with the oxidized OC without adversely affecting the particles itself and without the generation of partially combusted products. Preferably, the pressure is close to atmospheric pressure, albeit that a higher or lower pressure may be used, e.g., from 0.1 to 70 bar g, preferably from 0.5 to 5 bar g. Suitably, the pressure in the FR and the AR are substantially the same. Indeed, it may be beneficial to operate the FR (and optionally the AR) at high pressures, to facilitate for a subsequently CO₂ recompression, if any. The temperature may vary from 700 to 1200°C, preferably from 750 to 950°C.

The sour gas contains H₂S and/or volatile sulphur compounds. In addition to H₂S it may contain volatile hydrocarbons with up to 8 carbon atoms and organic derivatives thereof, as may be found in natural gas or fuel gases. Preferably, it contains volatile hydrocarbons and oxygenated derivatives thereof as may be found in natural gas, refinery gas or synthesis gas. The H₂S content is preferably ≥ 1 vol%, more preferably ≥ 5 vol%, still more preferably ≥ 10 vol%. Indeed, the higher the H₂S content, the more efficient the current process is to the conventional process using pre-treatment and combustion or just combustion with treatment of the produced flue gas stream. Even pure H₂S may be used (100 vol%), but suitable sour gas streams include those wherein the H₂S content is ≤ 80 vol%, more suitably ≤ 60 vol%, most suitably ≤ 30 vol%. For instance, a suitable sour gas stream comprises 15 ± 5 vol% H₂S; 10 ± 10 vol% CO₂ and the remainder being CH₄ and other hydrocarbons.

Oxygen carrier to fuel ratios suitable for full combustions are known in the art and may be easily determined when carrying out a series of experiments. Suitably a ratio ≥ 1.5 is used.

The waste stream from the AR is composed of N₂ with a reduced content of O₂. It may be released to the atmosphere or converted into pure N₂ and used in applications where inert gas is needed.

In addition to power/steam, the CLC flue gas stream from the FR is essentially composed of CO₂, and SO₂, optionally with no more than 10 vol% of other components. Such other components may comprise inert components of the sour gas, and/or oxygenates derived from contaminants of the sour gas. Since CO₂ is an important greenhouse gas, it is preferably captured and either used or compressed and stored. The H₂O may be condensed and separated. Although SO₂ is less noxious than H₂S it is preferably separated from the waste stream before storage of the CO₂.

This SO₂ may be separated from the CLC flue gas stream by conventional techniques. SO₂ can be captured either in a non-regenerable system which results in a byproduct or in a regenerable system where SO₂ can be recovered as a product. Indeed, since the SO₂ content in the gas is much higher than in conventional burner waste streams, the separation may be carried out at greater efficiency.

Preferably the SO₂ is separated using a regenerable SO₂ capture process and more specifically a solvent based scrubbing unit such as a Cansolv® SO₂ scrubbing unit. A Cansolv scrubbing unit typically uses a regenerable amine-based solvent, which is highly selective for SO₂ and produces a concentrated water-saturated stream of SO₂ (for instance, 90% SO₂ / 10% water. The produced SO₂ may be used for instance in a CLAUS unit to produce elemental sulphur, in a sulphuric acid plant to produce sulphuric acid or can be compressed to liquid SO₂.

## Claims

1. A process wherein a fuel gas is converted with air by chemical-looping combustion into thermal energy and steam while producing a flue gas stream comprising carbon dioxide (CO₂), wherein:
(i) an oxygen carrier (OC) is oxidized with air,
(ii) the fuel gas is oxidized with the oxidized OC, resulting in a (partially) spent oxygen carrier that is recycled to step (i) and the flue gas stream comprising the produced CO₂, and
(iii) the produced CO₂ is separated, and
(iv) optionally, the separated CO₂ is compressed and stored wherein:
(v) the fuel gas is sour gas containing H₂S and/or volatile sulphur compounds;
(vi) the flue gas stream further comprises SO₂, and
(vii) the SO₂ is separated from the flue gas stream.

2. The process of claim 1, wherein the oxygen carrier is a copper-based oxygen carrier, preferably CuO on a support, more preferably gamma-Al₂O3.

3. The process of claim 1 or 2, wherein the separated CO₂ is essentially pure.

4. The process of any one of claims 1 to 3, wherein the separated CO₂ is compressed and stored.

5. The process of any one of the preceding claims, wherein a chemical-looping combustor is used comprising an air reactor (AR) and wherein the reaction conditions in the AR are such as to convert the OC without adversely affecting the OC itself and without the generation of NOₓ.

6. The process of claim 5, wherein the pressure in the AR is in the range from 0.1 to 70 bar g, preferably from 0.5 to 5 bar g.

7. The process of claim 5 or 6, wherein the temperature in the AR is in the range from 700 to 1200°C, preferably from 750 to 950°C.

8. The process of any one of the preceding claims, wherein a chemical-looping combustor is used comprising a fuel reactor (FR) and wherein the reaction conditions in the FR are such as to fully convert the sour gas with the oxidized OC without adversely affecting the OC itself and without the generation of partially combusted products.

9. The process of claim 8, wherein the pressure in the FR is in the range from 0.1 to 70 bar g, preferably from 0.5 to 5 bar g and the temperature in the FR is in the range from 700 to 1200°C, preferably from 750 to 950°C.

10. The process of any one of the preceding claims, wherein the sour gas is untreated by a sweetening process.

11. The process of any one of the preceding claims, wherein the sour gas has an H₂S content of greater than 1300 ppmv, preferably ≥ 1 vol %, more preferably ≥ 5 vol%, still more preferably ≥ 10 vol%.

12. The process of claim 10, wherein the sour gas has an H₂S content that is ≤ 80 vol%, more preferably ≤ 60 vol%, still more preferably ≤ 30 vol%.

13. The process of any one of the preceding claims, wherein the SO₂ is separated using a regenerable or non-regenerable SO₂ capture process.

14. The process of claim 14, wherein the S0₂ is separated using a regenerable SO₂ capture process, preferably a solvent based SO₂ scrubbing process, more preferably a Cansolv® SO₂ scrubbing unit.

15. The process of any one of the preceding claims, wherein the separated SO₂ is used in a CLAUS unit to produce elemental sulphur or in a sulphuric acid plant to produce sulphuric acid or compressed to liquid SO₂.
